# EUROPÄISCHE PATENTSCHRIFT

(11) **EP 2 825 490 B1**
(45) Veröffentlichungstag und Bekanntmachung des Hinweises auf die Patenterteilung: **07.06.2017**
(21) Anmeldenummer: 13709388.6
(22) Anmeldetag: 06.03.2013
(51) Int. Cl.: B65G 47/57, B65G 57/03, B65G 57/14

(54) **VERFAHREN ZUR ÜBERGABE VON ARTIKELLAGEN ZWISCHEN BENACHBARTEN MODULEN**
METHOD FOR TRANSFERRING LAYERS OF ARTICLES BETWEEN NEIGHBOURING MODULES
PROCÉDÉ POUR TRANSFÉRER DES COUCHES D' ARTICLES ENTRE DES MODULES VOISINES

(30) Priorität: 14.03.2012 DE 102012204030
(43) Veröffentlichungstag der Anmeldung: 21.01.2015
(73) Patentinhaber: KRONES Aktiengesellschaft, 93073 Neutraubling (DE)
(72) Erfinder: BEER, Erhard, 93073 Neutraubling (DE); OSTERHAMMER, Martin, 93073 Neutraubling (DE)
(74) Vertreter: Benninger, Johannes
(86) Internationale Anmeldenummer: PCT/EP2013/054478
(87) Internationale Veröffentlichungsnummer: WO 2013/135536

(56) Entgegenhaltungen:
- DE-A1-102010 011 534
- DE-U1-202004 013 601
- GB-A- 1 150 300
- US-A- 4 055 257

## Beschreibung

Die vorliegende Erfindung betrifft ein Verfahren zur Übergabe und horizontalen Verschiebung von Artikellagen zwischen benachbarten Modulen mit den Merkmalen des unabhängigen Verfahrensanspruchs 1. Die Erfindung betrifft zudem eine entsprechende Vorrichtung mit den Merkmalen des unabhängigen Anspruchs 9.

Zur Palettierung von gesamten Artikellagen durchlaufen die Artikel normalerweise zunächst eine Gruppierstation, in der die transportierten Artikel zu palettierfähigen Lagen zusammengestellt werden. Diese palettierfähigen Lagen werden dann von einer Bereitstellungsstation an eine Beladestation überführt. Die Beladestation legt diese Artikellagen dann an einem gewünschten Ort ab. Dieser Ort wird meist durch einen Stapelplatz und eine darauf befindliche Palette gebildet, auf der die Artikellagen abgelegt werden können. Die Bereitstellungsstation und die Gruppierstation stellen meist eine Einheit dar und sind unmittelbar miteinander gekoppelt. Die Bereitstellungstation umfasst ebenso wie die Gruppierstation eine Auflagefläche oder Auflageebene, auf der die Artikel gruppiert und zu einer Lage zusammengestellt werden. Die Beladestation umfasst ebenso eine Auflageebene, welche in aus dem Stand der Technik bekannter Weise einteilig oder auch zwei- oder mehrteilig ausgeführt sein kann. Bei einer bspw. zweiteilig ausgebildeten Auflagefläche der Beladestation besteht die Auflagefläche aus zwei Tragböden oder sog. Beladeplatten, welche im Beladezustand geschlossen und anschließend während der Abgabe- oder Ablegephase zum Ablegen der Artikellage auf einem Stapelplatz oder einer Palette geöffnet werden. Dem Fachmann sind hier zahlreiche Varianten bekannt wie z.B. Jalousiegreiferköpfe oder ähnliches. Dabei verläuft ein solches Palettierverfahren mit einer aus dem Stand der Technik bekannten Palettiervorrichtung in einer Weise, dass zunächst Artikel mittels einer Gruppiereinrichtung zu einer palettierfähigen Lage zusammengestellt werden und im Anschluss daran von einem Bereitstellungsplatz bzw. einer Bereitstellungsstation in die Beladestation übergeben werden. Hierzu ist es notwendig, dass die Beladestation, wie z.B. ein an einem Hubwerk oder auch Roboter angeordneter Jalousiegreiferkopf, sich an den Bereitstellungsplatz anschließt damit die Überführung der Artikellage in die Beladestation erfolgen kann. Dabei verweilt der Jalousiegreiferkopf bzw. die Beladestation so lange an Ort und Stelle, bis die Lage vollständig von der Bereitstellungsstation in die Beladestation übergeben wurde. Befindet sich die Artikellage vollständig in der Beladestation, so positioniert die Beladestation durch horizontale und vertikale Bewegungen die Artikellage an einem gewünschten Abgabeort, meist auf einer auf einem Stapelplatz bereitgestellten Palette. Im Anschluss daran erfolgt die gleiche Prozedur erneut so lange, bis die gewünschte Anzahl an Lagen auf der Palette abgelegt wurde.

So offenbart die DE 10 2008 015 278 A1 eine Vorrichtung zum Beladen von Paletten mit Stückgütern mit einer Stückgutbereitstellungsstation und einer Übersetzvorrichtung zum Übersetzen der Gruppe von Stückgütern von der Stückgutbereitstellungsstation auf eine an einem Stapelplatz bereitgehaltene Palette und/oder eine bereits darauf befindliche übergesetzte Stückgutschicht. Zur Verbesserung einer Palettierleistung schlägt diese Vorrichtung vor, die Übersetzvorrichtung als geteilte Unterstützungsebenen auszugestalten. Dabei ist vorgesehen, dass zumindest ein Teil der Unterstützungsebenen so groß gewählt ist, dass eine vollständige Lage von der Stückgutbereitstellungsstation aufgenommen werden kann. Die Unterstützungsebenen werden somit beim Beladen derselben auseinander gefahren und an gegenüber liegenden Seiten des Stapelplatzes bereitgehalten. Dabei werden die Unterstützungsebenen zum Beladen auf ein Niveau angehoben oder abgesenkt, welches dem Höhenniveau der Stückgutbereitstellungstation entspricht. Sobald das gleiche Höhenniveau erreicht ist, wird die nächste Artikellage auf die Unterstützungsebene übergeschoben. Im Anschluss daran werden die Unterstützungsebenen auf das jeweilige nächste Lagenniveau zum Ablegen der Lage angehoben oder abgesenkt, wobei gleichzeitig die Unterstützungsebenen zusammengefahren werden und die Stückgutlage mittig auf die Unterstützungsebenen verschoben werden. Zum Ablegen werden die Unterstützungsebenen dann wiederum auseinander gefahren. Die genannte Vorrichtung hat auf Grund der zweiteiligen Unterstützungsebenen somit den Vorteil, dass während beispielsweise eines Vollpalettenauslaufs die Übersetzvorrichtung sich bereits wieder auf das Niveau der Stückgutbereitstellungsstation bewegen bzw. absenken oder anheben kann.

Einen Ablagevorgang, bei welchem eine Stückgutlage durch Auseinanderfahren zweier Aufnahmeelemente auf einer Palette oder einem Stückgutstapel abgelegt wird, zeigt die DE 10 2010 011 534 A1. Ein erstes Aufnahmeelement transportiert eine Stückgutlage von einem Übernahmeort in eine Position zu einem auf Ablagehöhe über einer Palette oder einem Stückgutstapel wartenden zweiten Aufnahmeelement, welches so ausgebildet ist, dass die zu überschiebende Stückgutlage etwa zur Hälfte auf beiden Aufnahmeelementen zu liegen kommt. Nachdem die hälftig auf beiden Aufnahmeelemente liegende Stückgutlage über der Palette bzw. dem Stückgutstapel zentriert wurde, werden beide Aufnahmeelemente in entgegengesetzter Richtung auseinander gefahren, die Stückgutlage dadurch auf der Palette bzw. dem dort vorhandenen Stückgutstapel abgelegt. Im Anschluss wird das zweite Aufnahmeelement über dem Stückgutstapel in Höhe der nächsten Ablageposition bereitgestellt, während das erste Aufnahmeelement zur Übernahme der als nächstes abzulegenden Stückgutlage an den Übernahmeort verfahren wird.

Die EP 1 321 396 A1 offenbart eine ähnliche Palettiervorrichtung, bei der Artikel in ungeordneter Weise von einer Horizontalfördereinrichtung in seitlicher Richtung verschoben und dabei gruppiert werden, bevor sie in kompletten Lagen auf eine Hubeinrichtung überführt werden. Die Hubeinrichtung bzw. Transferplattform dient dabei als Höhenausgleich zwischen der Gruppierstation und der Beladestation, welche die Lagen übereinander stapelt und mittels eines zu öffnenden Rollbodens auf einer Palette ablegt. Das Dokument offenbart weiterhin, dass die Transferplattform nicht in einer einzigen Bewegungsphase eine Anzahl an Reihen von Artikeln aufnehmen und überführen kann, welche zur Bildung einer vollständigen Artikellage notwendig ist. Der Vorteil wird dabei darin gesehen, dass bedingt durch die kleinere Bauart der Transferplattform und das nicht vollständige Anheben einer gesamten Artikellage weniger Gewicht angehoben werden muss und somit weniger Energieverbrauch stattfindet als bei dem Anheben der Beladestation an sich.

Aus dem Stand der Technik sind somit zahlreiche Varianten bekannt, die in Lagen zusammengestellte Artikel auf einer Palette stapeln können. Allen im Stand der Technik bekannten Vorrichtungen und Verfahren ist jedoch der Nachteil gemeinsam, dass zum Überführen einer Artikellage von einer Bereitstellungsstation oder einer Transferplattform in eine Beladestation bzw. auf eine Beladestation die Auflageflächen derselben ortsfest sein müssen und sich während des Überführens der Artikellage nicht vertikal bewegen dürfen. Dies führt zu einem erheblichen Zeitverlust dahingehend, dass der Beginn der Überführung der Artikellage erst nach vollständiger Positionierung und Stillstand der Beladestation oder der Transferplattform stattfinden kann. Es wird also immer so lange gewartet, bis die Beladestation die stationäre Bereitstellungsstation erreicht hat, bevor das Überführen der Artikellage gestartet werden kann. Auch bei der Verwendung einer Transferplattform wird ebenso so lange gewartet, bis die Transferplattform die aktuelle Position der Beladestation erreicht hat. Erst dann kann die Überführung der Artikellage gestartet werden. Zudem führen die jeweiligen betroffenen Stationen während der Überführung der Artikellage keine vertikalen Bewegungen durch, bis die Artikellage vollständig übergeben wurde. Entweder wird erst nach der Übergabe der Artikellage die Beladestation in die jeweilige nächste Abgabeposition gefahren oder die Beladestation befindet sich bereits bei der Übergabe der Artikellage in der nächsten gewünschten Abgabeposition.

Ein vorrangiges Ziel der vorliegenden Erfindung besteht darin, bei jeweils vertikal beweglichen Auflageebenen aufeinander folgender Stationen eines Transportsystems die Wartezeiten, bis eine Auflageebene einer einzelnen Station sich einer stillstehenden Auflageebene einer weiteren Station angenähert hat, weitgehend zu eliminieren, um auf diese Weise die Überführung von Artikellagen zwischen den Stationen wesentlich früher beginnen zu können. Ein weiteres Ziel der Erfindung besteht darin, die Zeiten zwischen dem Ablegen einer Artikellage und der Aufnahme einer weiteren Artikellage zu minimieren. So soll die Zeit, welche die Beladestation nach Ablegen einer Artikellage zum Anfahren einer nächsten Position zum Ablegen einer Artikellage benötigt, dahingehend genutzt werden, dass während dem Anfahren der nächsten Position bereits die Übergabe einer nachfolgenden Artikellage erfolgen kann.

Diese genannten Ziele werden mit den Gegenständen der unabhängigen Ansprüche im Wesentlichen dadurch erreicht, dass eine verbesserte Beweglichkeit und Steuerung der zur Verfügung stehenden Module innerhalb einer Förderstrecke zwischen einem Artikeltransport und deren Palettierung geschaffen wird, um durch simultane Überschub- und Hub- oder Senkvorgänge für komplette Artikellagen den Startzeitpunkt zur Überführung für die in Lagen gruppierten Artikel einerseits früher zu setzen sowie auch bereits während der noch nicht abgeschlossenen Hub- oder Senkvorgänge der einzelnen Module bzw. dessen Auflageebenen bereits die Überführung der Artikellage zu ermöglichen. Auf diese Weise kann die Förderung der Artikellagen innerhalb der Förderstrecke dadurch beschleunigt werden, dass nicht mehr zwingend ein Stillstand der vertikal beweglichen Auflageebenen der Module gefordert wird, sondern dass durch deren synchrone Bewegungsverläufe - d.h. durch synchrone Hebe- oder Senkvorgänge - bereits mit dem Überschieben begonnen werden kann, bevor die Vertikalbewegungen abgeschlossen sind.

Es sei an dieser Stelle betont, dass in der nachfolgenden Beschreibung und in den Ansprüchen die Begriffe Bereitstellungsstation, Beladestation und Transferstation der Einfachheit halber auch durch den Begriff des Moduls ersetzt sind. Jeder dieser genannten Stationen ist mindestens eine Auflagefläche oder Auflageebene zugeordnet, welche zum Aufnehmen einer Artikellage geeignet ist. So kann beispielsweise die Auflageebene oder Auflagefläche der Beladestation aus zwei Teilen bestehen. Die Auflageebene oder Auflageflächen der Bereitstellungsstation oder der Transferstation sind jedoch meist einteilig ausgebildet. Zudem wäre es denkbar, dass jede der Auflageflächen oder Auflageebenen auch durch angetriebene umlaufende Mattenketten- oder Rollenförderer oder dergleichen gebildet ist.

Die Erfindung schlägt zur Erreichung der genannten Ziele einerseits ein Verfahren zur horizontalen Überführung einer Artikelgruppe oder Artikellage von einer ersten vertikal beweglichen Auflagefläche oder Auflageebene eines ersten Moduls auf eine zweite vertikal bewegliche Auflagefläche oder Auflageebene eines dem ersten Modul in einer Förderrichtung unmittelbar nachgeordneten zweiten Moduls vor. Die Überführung erfolgt mittels einer geeigneten Überführungseinrichtung, welche die Artikellage zwischen den beiden annähernd fluchtenden Auflageebenen der beiden Module in Förderrichtung überführen kann, wobei erfindungsgemäß gleichzeitig eine annähernd synchrone und/oder gleichgerichtete Hebe- oder Senkbewegung der Auflageebenen erfolgen kann, um insbesondere das zweite Modul und dessen Auflageebene oder Auflagefläche bereits während der Überschubbewegung optimal zu positionieren, bspw. in Bezug auf eine Stapelhöhe von bereits übereinander abgelegten Artikellagen auf einem Stapelplatz. Die während der Überschubbewegung durchführbaren Vertikalbewegungen der beiden Module bzw. deren Auflageebenen sorgen für eine Minimierung der erforderlichen Zeiten vom Überführen der Artikellagen bis zum Ablegen der Artikellagen und tragen somit zu einer zeitlichen Überscheidung bzw. Parallelität einzelner Verfahrensschritte bei, welche zum Palettieren von Artikellagen notwendig sind. Diese zeitliche und/oder prozessuale Überscheidung einzelner Verfahrensschritte spart Zeit und trägt somit erheblich zu einer Leistungserhöhung des gesamten Palettierverfahrens bei. Es versteht sich für den Fachmann von selbst, dass bei dieser horizontalen Überführung die Relativpositionen einer die Artikelgruppe oder -lage bildenden Mehrzahl von Artikeln annähernd beibehalten werden sollen.

Bei dem erfindungsgemäßen Verfahren ist vorgesehen, dass die horizontale Überführung der Artikelgruppe oder -lage bei miteinander annähernd auf gleicher Ebene befindenden ersten und zweiten Auflageebenen der ersten und zweiten Module erfolgt. Zur Sicherstellung dieser fluchtenden Anordnung der ersten und zweiten Auflageebenen der ersten und zweiten Module ist es nicht erforderlich, dass die Auflageebenen ruhen bzw. stillstehen. Vielmehr findet gemäß einer bevorzugten Ausführungsvariante des erfindungsgemäßen Verfahrens während oder bereits kurz vor dem Starten der Überführung der Artikellage eine vertikale Bewegung nach oben oder unten der Module bzw. Auflageebenen statt. Dabei ist es so, dass je nach aktueller Stapelposition die Zeit der während des Überführens gleichgerichteten und annähernd synchronen vertikalen Bewegungen der Auflageebenen der Module ausreichen kann, um die Artikellage vollständig von einer Auflageebene des ersten Moduls auf die Auflageebene des zweiten Moduls zu überführen. Es ist aber auch denkbar, dass die Zeitdauer der annähernd synchronen und gleichgerichteten Vertikalbewegung beider Module und somit beider Auflageebenen nicht ausreichend ist, um die Artikellage vollständig von der ersten Auflageebene auf die zweite Auflageebene der beiden Module zu überführen, wonach die restliche Überführung zur vollständigen Übergabe der Artikellage bei bereits positionierten und somit sich nicht mehr vertikal bewegenden Modulen bzw. Auflageebenen erfolgen muss. Der gemeinsame Vorteil dieser beiden Fälle ist insbesondere darin zu sehen, dass der Startzeitpunkt des Überführens einer Artikellage von einer ersten Auflagefläche eines ersten Moduls auf eine zweite Auflageebene eines zweiten Moduls bereits unmittelbar kurz vor oder während einer gleichgerichteten annähernd synchronen vertikalen Bewegung der Auflageebenen erfolgen kann. Somit findet während der Positionierung beider Module bereits die Überführung der Artikellage statt.

Selbstverständlich kann der Überschub wahlweise auch bei still stehenden Modulen mit ihren zugehörigen Auflageebenen erfolgen, wenn sich diese zuvor in einer Weise angenähert haben, dass nach Möglichkeit Verfahrwege und damit auch Prozesszeiten eingespart wurden, so dass die Überschubprozesse insgesamt - d.h. in der Summe aller notwendigen Verfahrensschritte - in kürzer Zeit bzw. in höherer Geschwindigkeit ablaufen konnten. Insbesondere bei sich vertikal bewegenden Modulen besteht die Möglichkeit, die Zeit für den Überschub der Artikellagen zu reduzieren, da hierbei nicht abgewartet werden muss, bis die Module zum Stillstand gekommen sind, sondern auch bei sich bewegenden Modulen überschoben werden kann, solange die Vertikalbewegungen in einer Weise synchronisiert und aufeinander abgestimmt sind, dass zwischen den Auflageebenen keine Stufe besteht, welche die Artikelförderung behindern könnte.

Bei einer Variante des erfindungsgemäßen Verfahrens ist es durchaus auch möglich, dass die erste Auflageebene des ersten Moduls während der Überführung der Artikelgruppe oder Artikellage zumindest zeit- oder phasenweise in ihrem Höhenniveau gegenüber der zweiten Auflageebene des nachfolgenden zweiten Moduls unter Ausbildung einer Stufe geringfügig höher oder tiefer liegt. In diesem Fall können die Artikel bspw. über eine kleine Rampe nach oben oder unten auf das nachfolgende zweite Modul geschoben werden. Diese Variante ermöglicht es, dass der Überschubvorgang ggf. bereits begonnen wird, bevor die Auflageebenen vollständig miteinander fluchten, was wiederum Zeit für den Überschubvorgang und damit den gesamten Palettiervorgang einsparen kann. Selbstverständlich ist es auch möglich, dass die Auflageebenen bereits vor der Kontaktierung der zweiten Auflageebene mit den überschobenen Artikeln weitgehend miteinander fluchten und zu diesem Zweck das gleiche Höhenniveau erreicht haben.

Andererseits ermöglichen die verschiedenen Varianten des erfindungsgemäßen Verfahrens durch die aufeinander abgestimmte Vertikalsteuerung der beiden Auflageebenen der aufeinander folgenden ersten und zweiten Module, dass die Überführung der Artikelgruppe oder Artikellage von der ersten Auflageebene des ersten Moduls auf die zweite Auflageebene des zweiten Moduls unmittelbar vor einer Phase der Ausbildung der gemeinsamen Auflageebene der ersten und zweiten Auflageebenen oder gleichzeitig mit Erreichung dieser Phase gestartet wird. Da die zuvorderst stehenden Artikel einer vollständigen Artikellage normalerweise nicht am äußersten vorderen Rand der ersten Auflageebene stehen, kann die Überschubbewegung bereits begonnen werden, ohne dass bereits eine gemeinsame Auflageebene gebildet ist. Diese muss zumindest näherungsweise, ggf. unter Inkaufnahme einer leichten Stufe, erst dann gebildet sein, wenn die ersten Artikel tatsächlich die Grenze zwischen den beiden Auflageebenen passieren und auf die zweite Auflageebene des zweiten Moduls geschoben werden. Darüber hinaus müssen die erste Auflageebene des ersten Moduls und die zweite Auflageebene des zweiten Moduls bei ihrer zumindest zeit- oder phasenweise erfolgenden weitgehend synchronen vertikalen Bewegung zumindest so lange die erwähnte gemeinsame Auflageebene bilden, bis die Artikelgruppe oder Artikellage vollständig auf die zweite Auflageebene überführt wurde. Die gemeinsame Auflageebene kann somit bereits unmittelbar nach Passieren der hintersten Artikelreihe der kompletten Artikellage getrennt werden, indem bspw. die erste Auflageebene des ersten Moduls eine weitere Vertikalbewegung durchführt, um sich einem in Förderrichtung vorgeordnetem Modul anzunähern, von dem eine weitere Artikellage übernommen werden kann.

Im Zusammenhang der vorliegenden Erfindung ist es weiterhin wichtig, dass bei der erwähnten horizontalen Verschiebung der Artikelgruppe oder -lage die zwischen den aufeinander folgenden Auflageebenen die Relativpositionen einer die Artikelgruppe oder Artikellage bildenden Mehrzahl von Artikeln annähernd beibehalten werden. Die Verschiebung erfolgt deshalb mittels einer geeigneten Überschubeinrichtung, welche die Artikellage zwischen den beiden annähernd fluchtenden Auflageebenen der beiden Module in Förderrichtung verschieben kann, wobei erfindungsgemäß gleichzeitig eine annähernd synchrone Hebe- oder Senkbewegung erfolgen kann, um insbesondere das zweite Modul bereits während der Überschubbewegung optimal zu positionieren, bspw. in Bezug auf eine Stapelhöhe von bereits übereinander abgelegten Artikellagen auf einem Stapelplatz. Die während der Überschubbewegung durchführbaren Vertikalbewegungen der beiden Module sorgen für eine Minimierung der erforderlichen Transportzeiten und tragen zu einer Beschleunigung der erzielbaren Fördergeschwindigkeiten bei.

Um die zumindest temporär aufeinander abgestimmten Vertikalbewegungen der beiden Auflageebenen der ersten und zweiten Module zu erfassen, kann eine permanente Erfassung der aktuellen Vertikalpositionen der Auflageebenen sinnvoll sein, wobei die erfassten Werte zur Berechnung einer Annäherung zur Vorbereitung eines Überschubvorganges verarbeitet werden können. Das Ziel dieser Positionserfassung und Datenverarbeitung ist eine optimal aufeinander abgestimmte Bewegung der beiden Auflageebenen der aufeinander folgenden Module, so dass die Transferzeiten minimiert werden. Dies kann dadurch erreicht werden, indem die nicht synchronen und/oder gegensinnigen Bewegungen der Auflageebenen zugunsten der Phasen mit synchronen Bewegungen minimiert werden, sobald eine Artikellage überschoben werden soll.

Die Überschubeinrichtung kann bspw. durch wenigstens einen an den, in Bezug auf die Förder- bzw. Vorschubbewegung rückseits der Artikelgruppe oder Artikellage befindlichen Artikeln angreifenden Schubbalken gebildet sein. Zudem kann wahlweise vorgesehen sein, dass ein zumindest temporär den in Förderrichtung frontseitig befindlichen Artikeln zugeordneter Anlagebalken der Artikelgruppe oder -lage zumindest kurz vor oder bei Erreichen der Ruhelage mit geringem Abstand zu den vordersten Artikeln vorauseilt oder an diesen anliegt. Das erste Modul kann bspw. durch eine Transfereinheit oder einen Transfertisch mit vertikal beweglicher Auflageebene gebildet sein, während das zweite Modul durch eine Beladestation gebildet sein kann, die ebenfalls eine vertikal bewegliche Auflageebene umfasst. Eine sinnvolle Steuervorschrift kann vorsehen, dass eine aktuelle Vertikalposition der Beladestation bzw. der zweiten Auflageebene des zweiten Moduls die Richtung einer Vertikalbewegung der Transfereinheit bzw. der ersten Auflageebene des ersten Moduls zur Annäherung der beiden Module bzw. ihrer Auflageebenen dominiert.

Da der Transfer von gruppierten Artikeln oder von Artikellagen zwischen benachbarten Hubwerken bisher erforderte, dass die Stationen jeweils stillstanden und keine zeitgleichen Hubbewegungen ausführten, ist die Gesamtleistung solcher bekannten Palettiervorrichtungen begrenzt. Zwar ermöglichen die gleichzeitig vorne und hinten an der Artikellage anliegenden Anlage- und Schubbalken der Überschubeinrichtung die Stabilisierung aller Artikel beim Überschubvorgang, so dass die Lagen mit relativ hohen Geschwindigkeiten überschoben werden können, doch sind diese Geschwindigkeiten nicht beliebig zu steigern und finden ihre Grenzen an den physikalischen Möglichkeiten und zudem am jeweiligen Stillstand der Hubwerke während des Überschubs, die erst nach Beendigung der Überschubbewegungen wieder in vertikale Richtung zum weiteren Überladen der Artikellage bewegt werden können. Bei der vorliegenden Erfindung kann dagegen die Gesamtleistung eines Palettierers durch gleichzeitige Bewegungen erhöht werden, was dadurch erreicht wird, dass die Übergabe einer Lage von einem Modul wie bspw. einer Hubwerksstation zu einem weiteren Modul wie bspw. einer weiteren Hubwerksstation unter laufenden Hubwerksbewegungen bzw. Vertikalbewegungen erfolgen kann. Für die Übergabe einer Lage von einer Hubwerksstation zu einer anderen Hubwerksstation unter laufenden Hubwerksbewegungen werden die beiden Hubwerke sinnvollerweise mittels eines geeigneten Achskoordinationssystems gekoppelt. Abhängig vom Verarbeitungszyklus ist diese Achskoordination aktiviert bzw. deaktiviert. Die Zeit für das Palettieren einer Lage kann dadurch verkürzt werden. Während des Überschubes müssen andere Achsen (z.B. Hubwerke) nicht warten, bis der Überschub beendet ist.

Die Stabilisierung der mit hoher Geschwindigkeit zwischen benachbarten Modulen oder Hubwerken überschiebbaren Artikellagen wird durch das Zusammenwirken des von hinten schiebenden Schubbalkens und des von vorne stabilisierenden Anlagebalkens erreicht, wobei die Artikellage in diesem Förderabschnitt sinnvollerweise seitlich geführt sein kann. Durch die rückseitige Einwirkung des Schubbalkens und die seitlichen Führungen können Relativpositionen einer die Artikelgruppe bildenden Mehrzahl von Artikeln relativ zueinander weitgehend beibehalten werden; d.h. das Lagenbild der verschobenen Artikelgruppe bleibt dabei weitgehend aufrechterhalten. Dies wird im Wesentlichen dadurch erreicht, dass der Anlagebalken der Artikelgruppe zumindest kurz vor oder bei Erreichen der Ruhelage mit geringem Abstand zu den vordersten Artikeln vorauseilt oder an diesen anliegt. Eine solche Steuerung des Anlagebalkens in Abhängigkeit von der Förderbewegung der Artikelgruppe umfasst sowohl eine Bewegungssteuerung, bei welcher der Anlagebalken der Artikelgruppe in geringem Abstand vorauseilt als auch eine Bewegungssteuerung, bei welcher der Anlagebalken an der Artikelgruppe zumindest kurz vor oder bei Erreichen der Ruhelage anliegt und diese somit zumindest während der letzten Phase des Abbremsvorganges kontaktiert und stabilisiert. Darüber hinaus umfasst die Erfindung eine weitere Variante der Bewegungssteuerung, bei welcher der Anlagebalken die Artikelgruppe zwar zunächst während ihres Verzögerungsvorganges stabilisiert, sich jedoch unmittelbar vor Erreichen des Stillstandes wieder von der Artikelgruppe entfernt. Dies kann damit zusammenhängen, dass die Verzögerung der Artikelgruppe nicht gleichmäßig erfolgt, sondern kurz vor Erreichen der Ruhelage allmählich sanfter wird, um einen plötzlichen, ruckartigen Stopp der Artikelgruppe zu vermeiden. Bei einem derartigen sanften Anhaltevorgang, dem eine Verzögerungsphase mit stärkerer Verzögerung von einer höheren Fördergeschwindigkeit vorausgegangen sein kann, ist eine Kontaktierung der Artikelgruppe mit dem Anlagebalken unmittelbar vor dem Stillstand nicht mehr erforderlich, so dass dieser bereits wieder in beschleunigter Bewegung von der Artikelgruppe entfernt werden kann.

Auf die beschriebene Weise kann verhindert werden, dass die zuvorderst stehenden Artikel der verschobenen Artikelgruppe verschoben werden oder umkippen können, wenn die Artikelgruppe verzögert wird oder zum Stillstand kommt, insbesondere bei Erreichen einer Zielposition der Artikelgruppe. Grundsätzlich können die einzelnen Artikel der beförderten Artikelgruppe nicht nur beim Reduzieren der Überschubgeschwindigkeit destabilisiert werden. Auch allgemein beim Beschleunigen oder aber auch durch das Überschieben von der einen Fördereinheit des ersten Moduls oder Hubwerkes zur Fördereinheit des nachfolgenden Moduls oder Hubwerkes kann es bedingt durch hohe Überschubgeschwindigkeiten oder aber auch durch die Übergänge zwischen den zwei Förderern zu einem Verrutschen oder Umkippen einzelner Artikel kommen, was durch die erfindungsgemäße Bewegungssteuerung des der Artikelgruppe vorauseilenden und/oder dort anliegenden Anlagebalkens verhindert werden soll.

Das erfindungsgemäße Verfahren ermöglicht durch die beschriebene annähernd formschlüssige Übergabe einer Lage von Artikeln bzw. einer formatierten Artikelgruppe von einer Station oder einem Hubwerk zu einer in Förderrichtung nachfolgenden Station bzw. einem weiteren Hubwerk schnelle Überschubbewegungen, da ein sich mit den Vorschubbewegungen der Artikellage mitbewegender Rückhaltebalken oder mitfahrender Anschlag die einzelnen Artikel der Lage vor dem Verrutschen oder Umkippen bewahren kann. Neben der oben beschriebenen abgestimmten Vertikalsteuerung aufeinander folgender Stationen ermöglicht der Einsatz der in aufeinander abgestimmten Horizontalsteuerungen beweglichen Schub- und Anschlagbalken besonders schnelle Überschubvorgänge.

Wenn im vorliegenden Zusammenhang meist von Artikeln oder von Artikellagen die Rede ist, so können dies grundsätzlich die unterschiedlichsten Packgüter sein, bspw. einzelne Kartons, Getränkebehälter wie Flaschen, Dosen oder Getränkekartons, Stückgüter etc., die in vorgegebenen Anordnungen palettiert, gestapelt oder depalletiert werden können. Als Artikel kommen auch Gebinde in Frage, bspw. sog. Foliengebinde, Umreifungsgebinde o. dgl.

Die vorliegende Erfindung umfasst weiterhin eine Vorrichtung zur horizontalen Verschiebung einer Artikelgruppe oder Artikellage zwischen wenigstens zwei vertikal beweglichen Auflageebenen benachbarter Modulen unter weitgehender Beibehaltung der Relativpositionen einer die Artikelgruppe oder -lage bildenden Mehrzahl von Artikeln relativ zueinander. Diese Vorrichtung umfasst eine geeignete Überschubeinrichtung zum horizontalen Verschieben der Artikellage auf die Auflageebene eines benachbarten Moduls. Gemäß der Erfindung fluchten die ersten und zweiten Auflageebenen der ersten und zweiten Module zumindest näherungsweise, um das störungsfreie horizontale Überschieben einer Artikelgruppe oder -lage zwischen den Auflageebenen der Module zu ermöglichen. Dabei sind die ersten und zweiten Auflageebenen der ersten bzw. zweiten Module jeweils vertikal beweglich und zur horizontalen Verschiebbarkeit der Artikelgruppe oder -lage bei miteinander annähernd fluchtenden ersten und zweiten Auflageebenen in ihren Vertikalbewegungen synchronisierbar, so dass die Überschubbewegung während der sich gemeinsam senkenden oder hebenden Module erfolgen kann, was eine Zeitersparnis aufgrund schnellerer Überschubvorgänge ermöglicht.

Weiterhin kann bei der Vorrichtung vorgesehen sein, dass den ersten und/oder zweiten Modulen jeweils Positionssensoren zur Erfassung der aktuellen Vertikalpositionen der ersten und zweiten Auflageebenen zugeordnet sind, deren Werte zur Berechnung einer Annäherung zur Vorbereitung eines Überschubvorganges verarbeitet werden können. Mit Hilfe dieser Sensoren können jederzeit die Vertikalpositionen der Auflageebenen bestimmt und in einer die Signale der Sensoren verarbeiteten Steuerung aufeinander abgestimmt werden, so dass Überschubbewegungen bei sich vertikal bewegenden Modulen ermöglicht sind.

Das erste Modul kann bspw. durch eine Transfereinheit oder einen Transfertisch mit vertikal beweglicher erster Auflageebene gebildet sein, während das zweite Modul bspw. durch eine Beladestation mit vertikal beweglicher zweiter Auflageebene gebildet sein kann. Zudem kann es sinnvoll sein, wenn eine aktuelle Vertikalposition der zweiten Auflageebene der Beladestation bzw. des zweiten Moduls die Richtung einer Vertikalbewegung der ersten Auflageebene der Transfereinheit bzw. des ersten Moduls zur Annäherung der beiden Auflageebenen dominiert. Ebenso kann jedoch ein erstes Modul auch durch einen Gruppiertisch o. dgl. gebildet sein. Ein zweites Modul kann bspw. auch durch einen Aufzug und/oder einen Jalousiegreiferkopf oder ein anderes Hubwerk gebildet sein, das einen Höhenausgleich ermöglicht. Wenn im Zusammenhang der vorliegenden Erfindung von einem Höhenausgleich die Rede ist, so ist damit insbesondere eine Stapelmöglichkeit bei der Überführung der Artikellagen auf eines der Module gemeint. Da die Artikellagen bei der Palettierung in der Regel in mehreren Lagen übereinander gestapelt werden, muss zumindest eines der Module eine Höhenverstellbarkeit aufweisen. Diese Höhenverstellbarkeit umfasst sowohl eine Absenkbarkeit nach unten zur Überführung der Artikellagen in einem unteren Niveau als auch eine Hebbarkeit über das Niveau des ersten und/oder zweiten Moduls, um die Artikellagen auf die Oberseite bereits zuvor übereinander gestapelter Artikellagen ablegen zu können. Entsprechendes gilt auch bei der Depalettierung, da ein zu depalettierender Stapel mit mehreren Artikellagen je nach Fortschritt der Entnahme allmählich kleiner wird und eine Höhenanpassung des übernehmenden Moduls erfordert.

Die Überschubeinrichtung kann wenigstens einen an den Artikeln angreifenden Schubbalken sowie wenigstens einen frontseitig an der Artikellage angreifenden Anlagebalken umfassen, der in seiner Bewegung in Überschubrichtung zumindest temporär mit dem Schubbalken gekoppelt ist und auf diese Weise das Umfallen oder Verrutschen von Artikeln bei schnellen Überschub- und Bremsvorgängen verhindern kann. Wahlweise kann zumindest einer der Schubbalken und/oder wenigstens einer der Anlagebalken mit einem endlos umlaufenden Zugmittelantrieb zur Herstellung der Schubbewegungen gekoppelt sein. Es sind jedoch auch andere Antriebe für die Schub- und Anlagebalken möglich, so bspw. Linearantriebe.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt zwei schematische Ansichten einer beginnenden Überschubbewegung einer Artikellage von einem Modul auf ein benachbartes zweites Modul.
Fig. 2 zeigt in zwei Ansichten die erfolgte Überschubbewegung gemäß Fig. 1.
Fig. 3 bis Fig. 13 zeigen in verschiedenen aufeinander folgenden schematischen Ansichten die Prozessschritte beim Überschub einer Artikellage zwischen drei benachbarten Modulen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

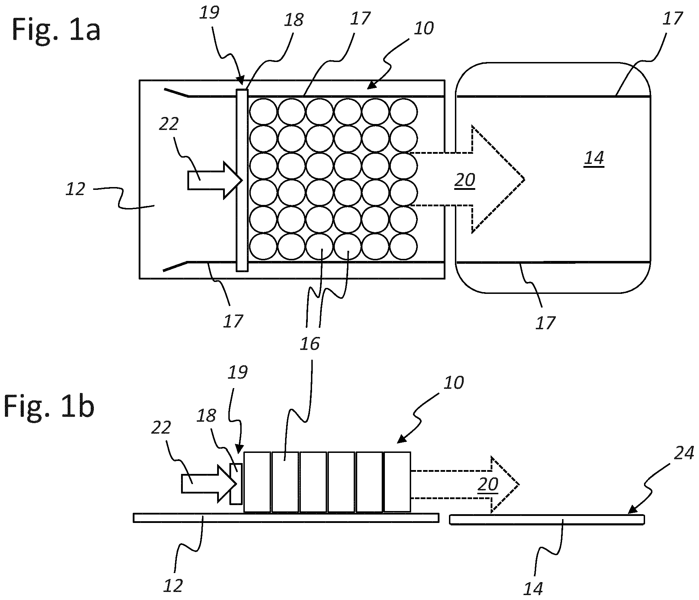

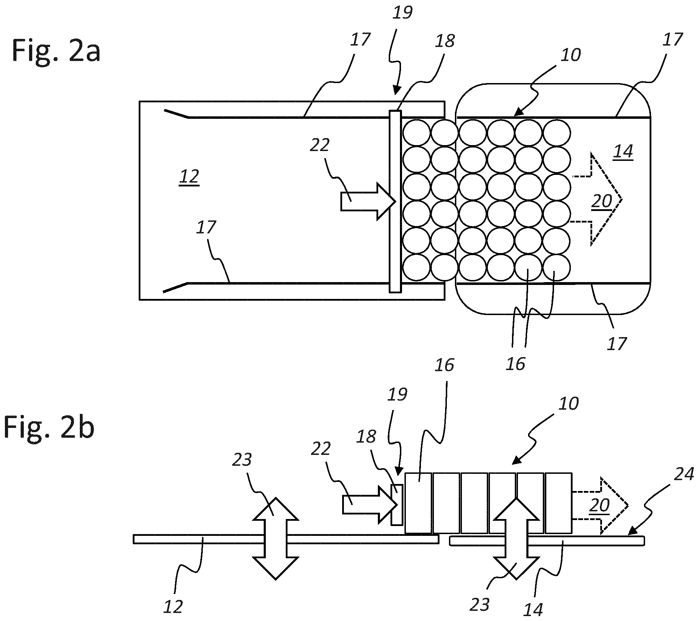

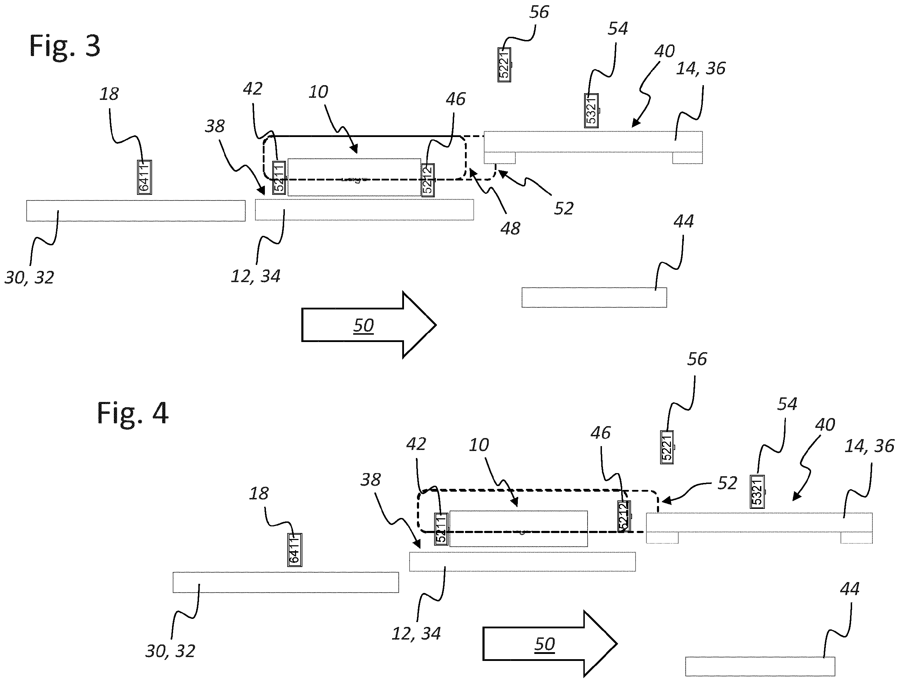

Die Fig. 1 zeigt in einer schematischen Draufsicht (Fig. 1a) und in einer schematischen Seitenansicht eine horizontale Verschiebung einer Artikelgruppe oder Artikellage 10 aus einer ersten Lage von einem ersten Modul 12, bspw. von einem Gruppiertisch, der Teil eines Gruppiersystems sein kann, in eine zweite Lage eines zweiten Moduls 14, das bspw. ein Hubmodul oder Beladestation o. dgl. sein kann. Die gezeigte Artikellage 10 umfasst im gezeigten Ausführungsbeispiel eine regelmäßige Anordnung einer Mehrzahl von Artikeln 16, die im Rechteckverbund stehen und ohne Änderung des Lagenbildes mittels einer Überschubeinrichtung 19 in Gestalt eines Schubbalkens 18 vom ersten Modul 12 auf das zweite Modul 14 geschoben werden sollen. Wie es die Figuren 3 bis 13 zeigen, kann die Überschubeinrichtung 19 weiterhin einen in den Figuren 1 und 2 nicht dargestellten Anlagebalken umfassen, der die Artikellage 10 frontseitig abstützt und stabilisiert und auf diese Weise verhindert, dass einzelne Artikel 16 beim starken Verzögern der Lage 10 verrutschen oder kippen können. Die Artikel 16 können bspw. Kartons, Gebinde mit mehreren einzelnen Artikeln oder Behältern oder auch einzelne Behälter sein, die in regelmäßiger Anordnung nebeneinander stehen. Normalerweise weisen die Artikel 16 eine Höhe auf, die größer ist als eine Seitenkante ihrer Grundfläche, so dass sie bei starken Beschleunigungen oder Verzögerungen zum Kippen neigen können, was durch die Gestaltung der Überschubeinrichtung 19 mit Schubbalken 18 und Anlagebalken (nicht dargestellt; vgl. Figuren 3 bis 13) verhindert wird.

Der für die Verschiebung der Artikelgruppe oder Artikellage 10 verantwortliche Schubbalken 18 der Überschubeinrichtung 19 greift an den in Bezug auf die Förder- bzw. Vorschubbewegung 20 rückseits der Artikelgruppe 10 befindlichen Artikeln 16 an und verschiebt dadurch die gesamte Artikelgruppe oder Artikellage 10, die ggf. zur Aufrechterhaltung des Lagenbildes seitlich geführt sein kann. Die optionalen seitlichen Führungen sind in der Fig. 1a und in der Fig. 2a mit der Bezugsziffer 17 bezeichnet. Durch die rückseitige Einwirkung des Schubbalkens 18 und die beidseitig des Überschubweges angeordneten seitlichen Führungen 17 können die Relativpositionen der die Artikelgruppe 10 bildenden Mehrzahl von Artikeln 16 relativ zueinander weitgehend beibehalten werden; d.h. das Lagenbild der verschobenen Artikelgruppe 10 bleibt entlang der Vorschubbewegung 20 weitgehend aufrechterhalten.

In den folgenden Figuren wurde auf die Darstellung der seitlichen Führungen 17 aus Gründen der besseren Übersichtlichkeit verzichtet, was jedoch nicht bedeutet, dass die Führungen dort nicht vorhanden wären.

Wie die beiden schematischen Darstellungen der Fig. 2 mit der Draufsicht der Fig. 2a und der Seitenansicht der Fig. 2b verdeutlichen, erfolgt die Vorschubbewegung 20 nicht mit konstanter Geschwindigkeit, da die Schiebebewegung 22 der Überschubeinrichtung 19 bzw. des Schubbalkens 18 zumindest kurz vor dem Erreichen der Zielposition der Artikellage 10 auf dem zweiten Modul 14 allmählich langsamer wird, damit sie nicht plötzlich zum Stillstand kommt. Die Gefahr, dass einzelne der zuvorderst in der verschobenen Artikellage 10 stehenden Artikel 16 verrutschen oder umkippen können, wenn die Artikellage 10 stärker verzögert wird oder plötzlich zum Stillstand kommt, insbesondere bei Erreichen der Zielposition der Artikellage 10, wird durch Einsatz des erwähnten Anlagebalkens reduziert. Da der Schubbalken 18 die Artikellage 10 typischerweise gegenüber einer Auflageebene 24 des ersten und/oder zweiten Moduls 12, 14 verschiebt, auf der die verschobenen Artikel 16 gleiten, besteht zwischen den Bodenflächen der Artikel 16 und der Auflageebene 24 eine permanente Gleitreibung, die für einen Reibungswiderstand zwischen den gleitenden Oberflächen sorgt. Aus diesem Grund könnte eine starke Verzögerung der Artikellage 10 zu einem Umkippen einzelner Artikel 16 oder zu deren Verschieben gegenüber den benachbarten Artikeln 16 führen, was durch die in den Figuren 3 ff. dargestellten Anlagebalken verhindert werden kann.

Wie es die Fig. 2b andeutet, ermöglicht die Erfindung eine synchrone Vertikalbewegung 23 der beiden Module 12 und 14 während des Überschubvorganges, so dass sich die horizontale Schiebebewegung 22 der Artikellage 10 und die synchrone vertikale Hubbewegung 23 der Module 12 und 14 überlagern können, was eine deutliche Zeitersparnis der Überschubvorgänge gegenüber den bisher eingesetzten Palettiervorrichtungen erlaubt.

Die schematischen Ansichten der Fig. 3 bis Fig. 13 zeigen aufeinander folgende Prozessschritte beim Überschub einer kompletten Artikellage 10 zwischen drei benachbarten Modulen 12, 14 und 30. In diesem Ausführungsbeispiel kann das jeweils links dargestellte dritte Modul 30 bspw. durch ein Gruppiersystem 32 oder einen Bereitstellungsplatz gebildet sein, von dem jeweils nacheinander fertig gruppierte Artikellagen 10 zur Verfügung gestellt werden. Diese Artikellagen 10, die zuvor von einem hier nicht dargestellten Sortier- und/oder Gruppiersystem in die Lagenformation gebracht wurden, stehen dann auf dem Gruppiertisch oder Gruppiersystem 32 zur Verfügung. Ein solches Gruppier- oder Sortiersystem kann bspw. einen oder mehrere Handhabungsroboter umfassen, die aus einem oder mehreren Artikelzuläufen geschlossene Artikellagen 10 bilden, die in der dargestellten Weise auf das dritte Modul 30 bzw. das Gruppiersystem 32 überführt werden. Das Gruppiersystem 32 muss nicht höhenverstellbar oder seitlich verschiebbar sein, sondern kann ortsfest angeordnet sein, wie dies auch aus den Figuren 3 bis 13 hervorgeht. Wahlweise jedoch kann das Gruppiersystem 32 auch höhenverstellbar ausgebildet sein, insbesondere bei einem optionalen Entfall der dem Gruppiersystem 32 nachgeordneten Transfereinheit 34 (nicht dargestellt). Bei einer solchen Konfiguration kann das höhenverstellbare Gruppiersystem 32 für einen direkten Überschub der Artikellagen 10 zur Beladestation 36 vorbereitet sein. In diesem Fall sind die normalerweise der Transfereinheit 34 zugeordneten Schubbalken und Anschlagbalken dem Gruppiersystem 32 zuzuordnen und in geeigneter Weise in ihren Bewegungen zu steuern.

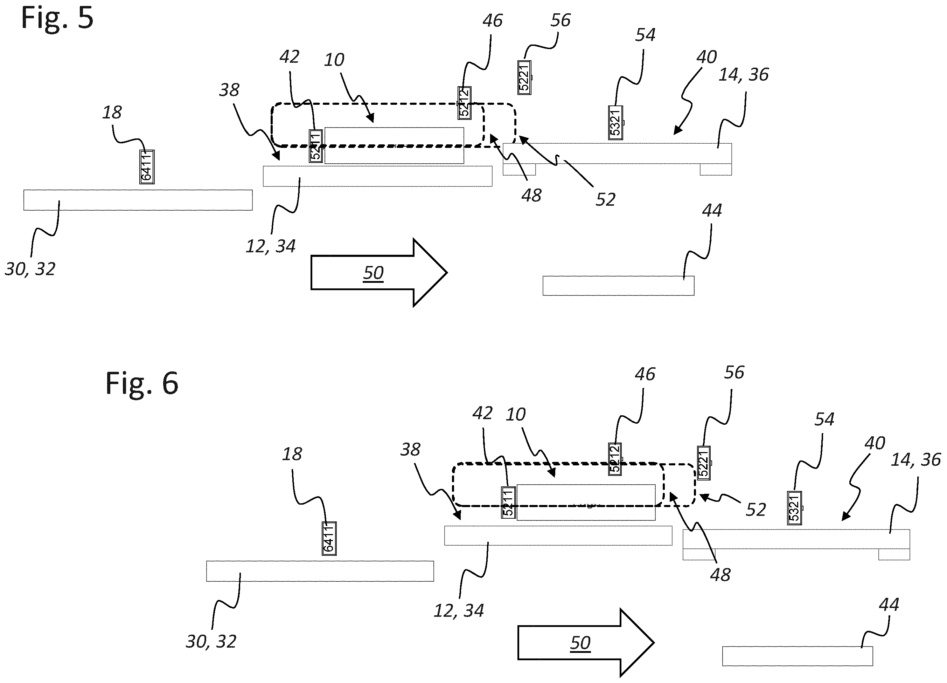

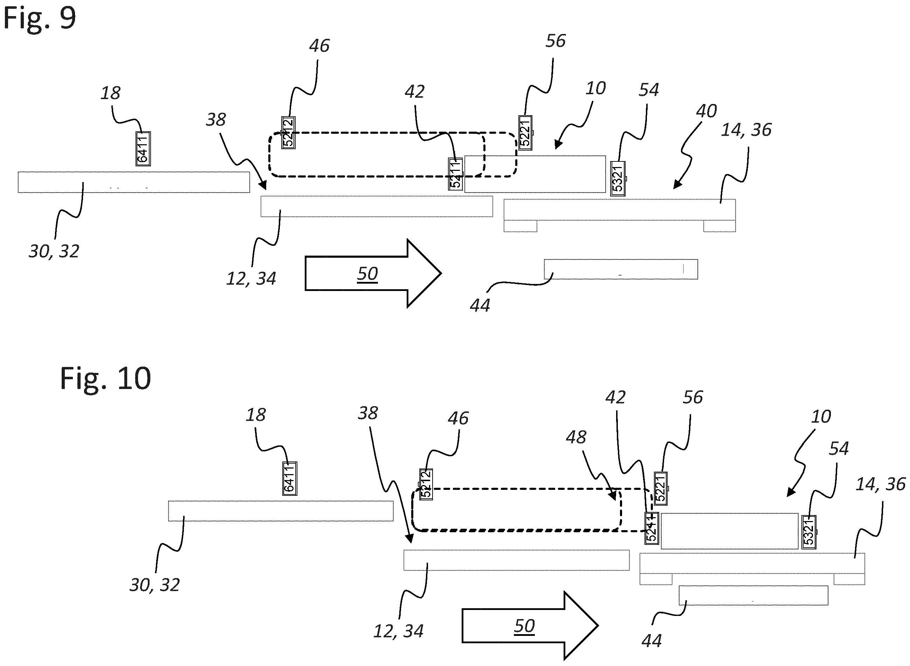

Wie es die Figuren 3 bis 13 erkennen lassen, erfolgt die horizontale Verschiebung der Artikellage 10 bei miteinander fluchtenden ersten und zweiten Auflageebenen 38 und 40 der ersten und zweiten Module 12 und 14 bzw. der Transfereinheit 34 und der Beladestation 36. Wie insbesondere die Figuren 6 bis 10 erkennen lassen, ist es zur Sicherstellung dieser fluchtenden Anordnung der ersten und zweiten Auflageebenen 38 und 40 der ersten und zweiten Module 12 und 14 nicht erforderlich, dass die Auflageebenen 38 und 40 ruhen bzw. stillstehen. Vielmehr kann gemäß einem zentralen Aspekt der vorliegenden Erfindung die Überführung der Artikellage 10 auch bei sich vertikal nach oben oder unten bewegenden Auflageebenen 38 und 40 der Module 12 und 14 erfolgen, wobei diese Vertikalbewegungen zumindest solange synchron zu erfolgen haben, bis die Artikellage 10 vollständig überschoben ist (vgl. Fig. 10). Der Vollständigkeit halber sei erwähnt, dass die Beladestation 36 ggf. bereits vor der Überführung der kompletten Artikellage 10 ihre Zielposition erreicht haben kann. In diesem Fall müssen sich die beiden Auflageebenen 38 und 40 selbstverständlich nicht bis zur vollständigen Überführung der Artikellage 10 synchron bewegen, sondern können auch gemeinsam stillstehen. Sofern die Zielposition für die zweite Auflageebene 40 erreicht ist, kommt diese zum Stillstand und muss in diesem Fall gestoppt werden, bevor alle Artikel überführt wurden. Durch die sich vertikal bewegenden ersten und zweiten Auflageebenen 38 und 40 der ersten bzw. zweiten Module 12 und 14 besteht die Möglichkeit, die Gesamtzeit für den Überführungsvorgang der Artikellagen 10 zu reduzieren, da hierbei nicht abgewartet werden muss, bis die Auflageebenen 38 bzw. 40 zum Stillstand gekommen sind, sondern die Lage 10 auch bei sich gemeinsam und synchron bewegenden Auflageebenen 38 und 40 überschoben werden kann, solange die Vertikalbewegungen in einer Weise synchronisiert und aufeinander abgestimmt sind, dass zwischen den Auflageebenen 38 und 40 keine oder nur eine geringfügige Stufe gebildet ist, welche die Artikelförderung unter Umständen behindern könnte. Eine geringfügig nach unten abfallende Stufe zwischen den beiden Auflageebenen 38 und 40 kann jedoch akzeptiert werden, solange sie nicht zu einer Störung der Überschubbewegung führt. Auch eine geringfügig nach oben steigende Stufe zwischen der ersten und zweiten Auflageebene 38 bzw. 40 kann dann einen störungsfreien Artikeltransport ermöglichen, wenn durch eine geeignete Rampe gesichert ist, dass die Artikel 16 dort nicht hängenbleiben oder kippen können.

Um die zumindest temporär aufeinander abgestimmten Vertikalbewegungen der ersten und zweiten Auflageebenen 38 und 40 der beiden Module 12 und 14 zu erfassen, können geeignete, hier nicht dargestellte Sensoren vorgesehen sein, die eine permanente Erfassung der aktuellen Vertikalpositionen der Auflageebenen 38 und 40 ermöglichen, wobei die erfassten Werte zur Berechnung einer Annäherung zur Vorbereitung eines Überschubvorganges verarbeitet werden können. Das Ziel dieser Positionserfassung und Datenverarbeitung ist eine optimal aufeinander abgestimmte Bewegung der beiden vertikal beweglichen Auflageebenen 38 und 40, so dass die Transferzeiten, d.h. die Zeit bis zum Start der Überführung der Artikellagen, zwischen der Transfereinheit 34 und der Beladestation 36 minimiert werden kann. Dies kann dadurch erreicht werden, indem die nicht synchronen und/oder gegensinnigen Bewegungen der Auflageebenen 38 und 40 zugunsten der Phasen mit synchronen Bewegungen minimiert werden, sobald eine Artikellage 10 überschoben werden soll. Eine sinnvolle Steuervorschrift kann bspw. vorsehen, dass eine aktuelle Vertikalposition der Beladestation 36 bzw. der zweiten Auflageebene 40 des zweiten Moduls 14 die Richtung einer Vertikalbewegung der Transfereinheit 34 bzw. der ersten Auflageebene 38 des ersten Moduls 14 zur Annäherung der beiden Auflageebenen 38 und 40 der beiden Module 12 und 14 dominiert.

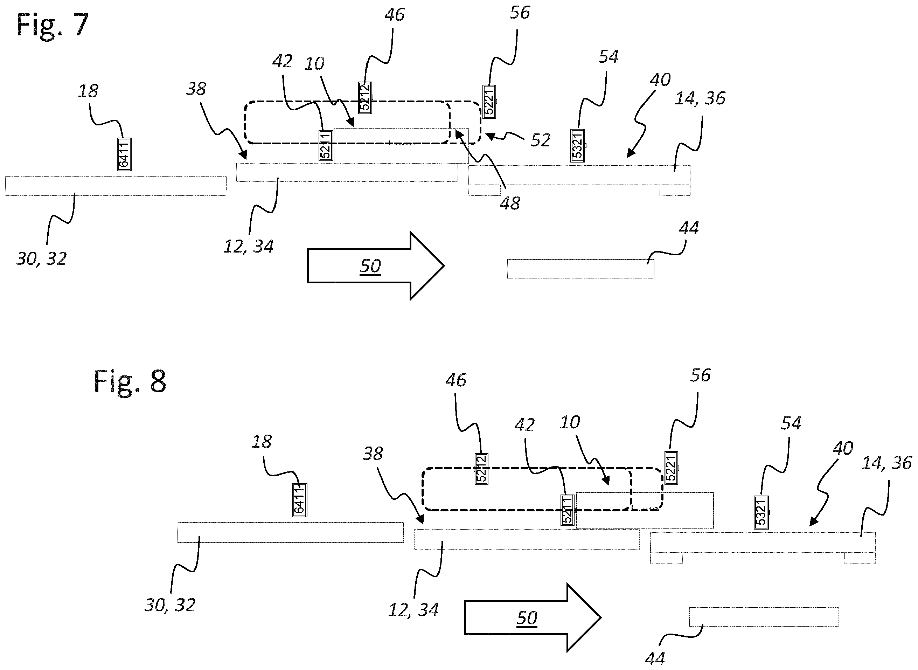

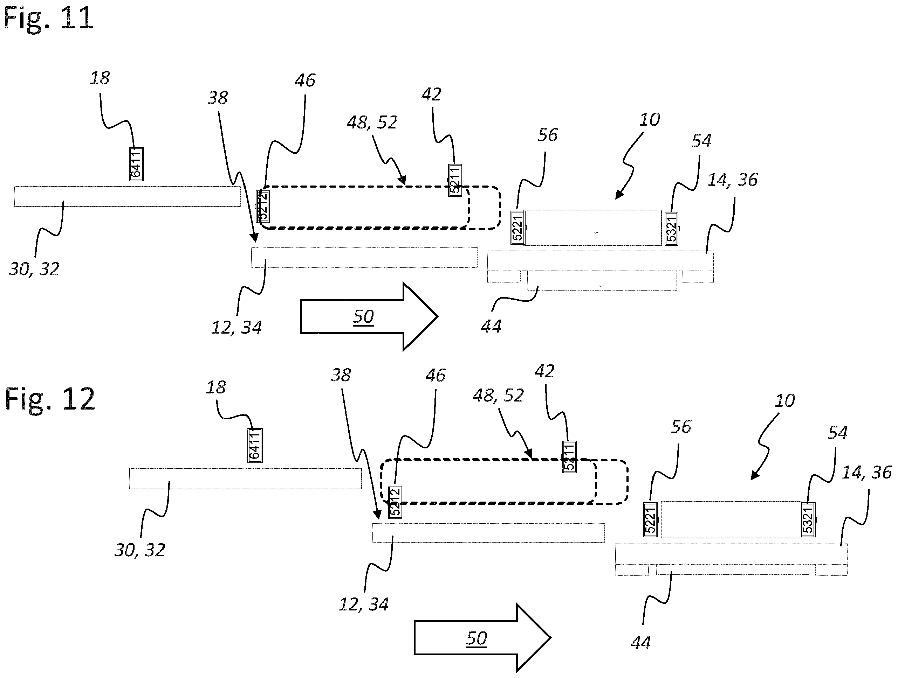

Die Darstellung der Fig. 3 zeigt eine bereits vom dritten Modul 30, dem Gruppiersystem 32 auf das diesem nachgeordnete erste Modul 12 bzw. die Transfereinheit 34 überschobene Artikellage 10, die dort mittels des horizontal beweglichen ersten Schubbalkens 42 nach rechts auf das noch oberhalb der vertikal beweglichen Transfereinheit 34 befindliche zweite Modul 14 verschoben werden kann, wie dies ab der Fig. 7 verdeutlicht ist. Wie bereits erwähnt, ist das erste Modul 12 hier durch die Transfereinheit 34 bzw. einen sog. Transfertisch gebildet, dessen Auflageebene 38 höhenverstellbar ausgebildet ist, um einen Überschub auf die auf dasselbe Höhenniveau gebrachte Beladestation 36 zu ermöglichen. Diese je nach Beladezustand eines darunter angeordneten Palettensegments 44 in der Höhe verstellbare Beladestation 36 bildet im dargestellten Ausführungsbeispiel das zweite Modul 14. Wie es die Figuren 7 bis 10 verdeutlichen, wird die Artikellage 10 mittels des dem ersten Modul 12 zugeordneten ersten Schubbalkens 42 vom ersten Modul 12 bzw. der Transfereinheit 34 in horizontaler Richtung nach rechts auf das zweite Modul 14 bzw. die Beladestation 36 überschoben, wobei ein der Transfereinheit 34 zugeordneter erster Anlagebalken 46 die vorderen Artikel der überschobenen Artikellage 10 stabilisiert und deren Verrutschen oder das Kippen einzelner Artikel verhindert. Der erste Anlagebalken 46 bewegt sich annähernd über die gesamte Länge des ersten Moduls 12 bzw. der Transfereinheit 34. Die Fig. 10 zeigt zudem eine Besonderheit dieser Ausführungsvariante, bei welcher der erste Schubbalken 42 über die Transfereinheit 34 hinaus auf den Rand der Beladestation 36 geschoben wird, bevor er gemäß Fig. 11 wieder zurückgezogen wird, um eine weitere Artikellage 10 vom ersten Modul 12 bzw. von der Transfereinheit 34 auf das zweite Modul 14 bzw. auf die Beladestation 36 überschieben zu können.

Wie es die Figuren 3 bis 6 verdeutlichen, müssen für einen Überschubvorgang der Artikellage 10 von der Transfereinheit 34 auf die nachgeordnete Beladestation 36 zunächst deren Auflageebenen 38 und 40 auf annähernd dasselbe Höhenniveau gebraucht werden, damit sie zumindest näherungsweise miteinander fluchten und ein problemloser Überschub der Artikellage zu gewährleisten ist. Während sich in der Prozessphase gemäß Fig. 3 die Transfereinheit 34 noch auf dem Höhenniveau des vorgeordneten Gruppiersystems 32 und deutlich unterhalb der Beladestation 36 befindet, wird die Transfereinheit 34 mit der darauf befindlichen Artikellage 10 vertikal angehoben, während gleichzeitig die Beladestation 36 abgesenkt wird (Fig. 4, Fig. 5), was eine signifikante Reduzierung der Prozessdauer für die Palettierung der Artikellagen 10 bedeuten kann. Im Prozessschritt gemäß Fig. 6 haben sich die Auflageebenen 38 und 40 der ersten und zweiten Module 12 und 14 soweit angenähert, dass mit dem Überschub der Artikellage 10 von der Transfereinheit 34 auf die Beladestation 36 durch Verschieben des ersten Schubbalkens 42 nach rechts begonnen werden kann. Der erste Anlagebalken 46, der für den Überschubvorgang der Artikellage 10 vom Gruppiersystem 32 auf die Transfereinheit 34 zur Stabilisierung der Artikellage 10 benötigt wurde, wird während des Überschubvorganges bereits wieder in seine Ausgangslage zurück gebracht, wozu er eine erste Bewegungsbahn 48 beschreibt, die eine zwei horizontale Abschnitte parallel zur ersten Auflageebene 38 und zwei vertikale Verbindungsabschnitte aufweist, so dass sich ein aktiver Bewegungsabschnitt auf Höhe der zu stabilisierenden Artikellage 10 und ein inaktiver Rücklaufabschnitt oberhalb der Artikellage 10 ergibt, auf dem der erste Anlagebalken 46 an den vorderen Rand der Transfereinheit 34 zurückgeführt wird, nachdem er die Artikellage 10 bis zu deren Stillstand auf der Transfereinheit 34 stabilisiert hat. Allerdings sei darauf hingewiesen, dass die Steuerung des Anlagebalkens 46 auch in einer Weise erfolgen kann, dass die Lage 10 gar nicht stillstehen muss. Der Balken 46 kann bspw. in geeigneter Weise beschleunigt von der Artikellage 10 weggefahren werden, so dass die Artikellage 10 in ständiger Überführungsbewegung bleiben kann.

Wie es die Figuren 6 bis 10 verdeutlichen, kann der Überschub der kompletten Artikellage 10 vom ersten Modul 12 auf das zweite Modul 14 erfolgen, sobald deren Auflageebenen 38 und 40 annähernd miteinander fluchten. Bei beginnender Überschubbewegung (Fig. 6) befindet sich der erste Anlagebalken 46 bereits oberhalb der Artikellage 10 im inaktiven Rücklaufabschnitt der ersten Bewegungsbahn 48, um zum vorderen Rand der Transfereinheit 34 bewegt zu werden, wo er für die Übernahme einer weiteren Artikellage 10 von der Gruppiereinheit 32 bereitgestellt werden kann (vgl. Fig. 11). Der erste Schubbalken 42 bewegt sich dagegen in Förderrichtung 50 der Artikellage 10 und entlang einer zweiten Bewegungsbahn 52, die sich über weite Abschnitte mit dem Verlauf der ersten Bewegungsbahn 48 des ersten Anlagebalkens 46 deckt. Wie es jedoch insbesondere die Fig. 10 erkennen lässt, erstreckt sich die zweite Bewegungsbahn 52 in Förderrichtung 50 über die Länge der ersten Auflageebene 38 der Transfereinheit 34 hinaus und über den Rand der zweiten Auflageebene 40 der Beladestation 36, so dass die Artikellage 10 ohne Unterbrechung auf die Beladestation 36 überschoben werden kann, wo der erste Schubbalken 42 nach oben fährt und dadurch aus dem Eingriffsbereich mit der Artikellage 10 gebracht wird, wonach er auf dem inaktiven Rücklaufabschnitt der zweiten Bewegungsbahn 52 zurückgeführt wird. So verdeutlichen die Figuren 11 bis 13 einen Verschiebeweg des ersten Schubbalkens 42, der über die Länge des Transfertisches 34 hinausreicht und teilweise in den Bereich der Beladestation 36 des zweiten Moduls 14 hineinreicht. Dieser erweiterte Verschiebeweg des ersten Schubbalkens 42 ermöglicht einen Überschub der Artikellage 10 in einem Zug vom ersten Modul 12 auf das zweite Modul 14 bzw. zwischen deren Auflageebenen 38 und 40, ohne dass eine Unterbrechung der Überschubbewegung erforderlich ist.

Um die unabhängigen Bewegungsverläufe des ersten Schubbalkens 42 und des ersten Anlagebalkens 46 auf ihren jeweiligen Bewegungsbahnen 48 und 52 zu ermöglichen, sind normalerweise separate Antriebseinrichtungen vorgesehen, die unabhängig voneinander steuerbar sind. Dies können bspw. separate Zugmittelantriebe, bspw. Kettenantriebe o. dgl. sein, die über elektrische Antriebsmotoren verfügen.

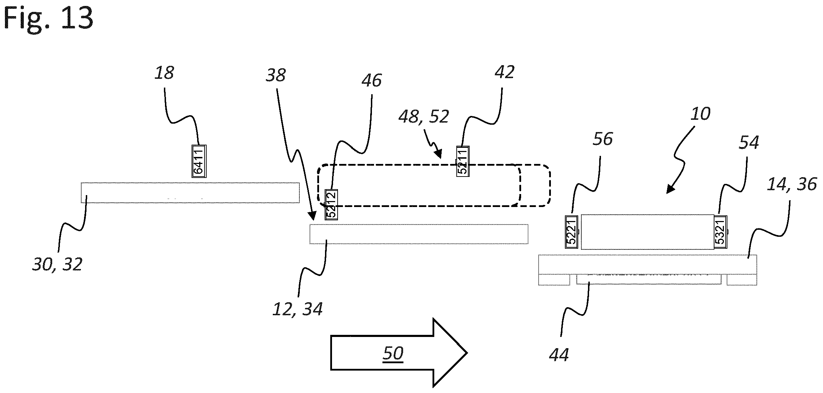

Ein der Beladestation 36 zugeordneter zweiter Anlagebalken 54, der zumindest abschnittsweise annähernd synchron mit dem ersten Schubbalken 42 nach rechts bewegt wird und dabei der Artikellage 10 vorauseilt, sorgt dort für die Stabilisierung der Artikellage 10 und verhindert das Umfallen oder Verrutschen einzelner Artikel. Nach Durchlaufen einer Bereitstellungslage, bei welcher der zweite Anlagebalken 54 ungefähr mittig über der zweiten Auflageebene 40 der Beladestation 36 positioniert sein kann (vgl. Fig. 8), kontaktiert die Artikellage 10 den zweiten Anlagebalken 54 beim weiteren Überschub (vgl. Fig. 9), wonach er der Artikellage 10 bei deren weiterer Überschubbewegung nach rechts vorauseilt, bis der erste Schubbalken 42 angehoben und aus dem Eingriff mit der Artikellage 10 gebracht wird (vgl. Fig. 10). Sobald der erste Schubbalken 42 der Transfereinheit 34 seine Überschubbewegung beendet hat und entlang der zweiten Bewegungsbahn 52 im Bereich der Beladestation 36 vertikal nach oben gefahren wird (Fig. 11), wird ein der Beladestation 36 zugeordneter zweiter Schubbalken 56 abgesenkt, der gemeinsam mit dem zweiten Anlagebalken 54 für die Zentrierung und mittige Positionierung der Artikellage 10 auf der Beladestation 36 sorgen kann (Fig. 11, Fig. 12), bevor die Artikellage 10 von der Beladestation 36 auf das darunter angeordnete Palettensegment 44 übergeben werden kann (Fig. 13).

Eine solche Übergabe der Artikellage 10 kann bspw. mittels eines Jalousie- oder sog. Plattengreiferkopfes realisiert werden, der eine komplette Artikellage 10 nach unten durch Öffnen oder seitliches Verschieben seines verschiebbaren Bodens abladen kann.

Nachdem die Artikellage 10 auf die Beladestation 36 überführt wurde (Fig. 11), besteht keine Notwendigkeit mehr, dass die Auflageebenen 38 und 40 der ersten und zweiten Module 12 und 14 miteinander fluchten, weshalb die erste Auflageebene 38 des ersten Moduls 12 bzw. der Transfereinheit 34 bereits wieder auf das Höhenniveau des Gruppiersystems 32 angehoben werden kann (Fig. 12, Fig. 13).

Es sei an dieser Stelle erwähnt, dass auch andere Bewegungsverläufe und Kombinationen der in den Figuren 3 bis 13 gezeigten Überschubbewegungen mit gleichen oder ähnlichen zusammenwirkenden Modulen 12, 14 und 30 möglich sind, ohne dass das Prinzip der Überschubbewegung von geschlossenen Artikellagen 10 dabei grundlegend verändert wird. Darüber hinaus sei betont, dass der gezeigte Bewegungsverlauf des Transfertischs 34 vom höher liegenden Gruppiersystem 32 zur tiefer liegenden Beladestation 36 keineswegs einschränkend, sondern nur beispielhaft zu verstehen ist. So können sich auf dem Stapelplatz des Palettensegments 44 nach mehreren Überschubvorgängen mehrere übereinander gestapelte Artikellagen 10 befinden, so dass es notwendig sein kann, eine weitere Artikellage 10 nach der Übernahme vom Gruppiersystem 32 durch Anheben des Transfertischs 34 zur Beladestation 36 zu überführen. In diesem - hier nicht dargestellten - Fall wird der Transfertisch 34 nicht entsprechend der Figuren 7 bis 11 mit der darauf befindlichen Artikellage 10 auf das Niveau der Beladestation 36 abgesenkt, sondern ggf. auf ein Niveau einer dort zuoberst liegenden Artikellage 10 angehoben.

Eine weitere, hier jedoch nicht dargestellte Variante des Stapelverfahrens kann wahlweise vorsehen, dass auf der Beladestation 36 mehrere Artikellagen 10 gleichzeitig abgelegt werden. Durch die gleichzeitige Handhabung und Stapelung mehrerer Artikellagen 10 können die Palettenwechselzeiten deutlich reduziert werden. Hierdurch fungiert die Beladestation 36 als eine Art Zwischenspeicher, wodurch die erforderlichen Zeiten für einen Palettenwechsel minimiert werden können.

Wie oben erwähnt, kann eine weitere - hier nicht dargestellte - Variante lediglich das Gruppiersystem 32 und die Beladestation 36 umfassen, wobei das Gruppiersystem 32 höhenverstellbar ausgeführt sein muss, um die unterschiedlichen Höhenniveaus der auf der Beladestation 36 befindlichen Stapeln mit Artikellagen 10 ausgleichen zu können. Auch in diesem Fall ist eine synchrone Vertikalbewegung der beiden Systeme 32 und 36 erforderlich, um entsprechend der Erfindung einen Überschub der Artikellage 10 während der Vertikalbewegung der beiden Auflageebenen zu ermöglichen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Artikellage, Artikelgruppe
- 12: erstes Modul
- 14: zweites Modul
- 16: Artikel, Gebinde, Behälter
- 17: seitliche Führung
- 18: Schubbalken
- 19: Überführungseinrichtung, Überschubeinrichtung
- 20: Vorschubbewegung
- 22: Schiebebewegung (Schubbalken)
- 23: Vertikalbewegung, Hubbewegung (erste und zweite Module)
- 24: Auflageebene
- 30: drittes Modul
- 32: Gruppiersystem
- 34: Transfereinheit
- 36: Beladestation
- 38: erste Auflageebene
- 40: zweite Auflageebene
- 42: erster Schubbalken
- 44: Palettensegment
- 46: erster Anlagebalken
- 48: erste Bewegungsbahn
- 50: Förderrichtung
- 52: zweite Bewegungsbahn
- 54: zweiter Anlagebalken
- 56: zweiter Schubbalken

## Patentansprüche

1. Verfahren zur horizontalen Verschiebung einer Artikelgruppe oder Artikellage (10) von einer ersten vertikal beweglichen Auflageebene (38) eines ersten Moduls (12) auf eine zweite vertikal bewegliche Auflageebene (40) eines dem ersten Modul (12) in einer Förderrichtung (20, 50) unmittelbar nachgeordneten zweiten Moduls (14) mittels wenigstens einer Überführungseinrichtung (19), **dadurch gekennzeichnet, dass** sich die erste Auflageebene (38) des ersten Moduls (12) und die zweite Auflageebene (40) des zweiten Moduls (14) zumindest zeit- oder phasenweise während des Überführens der Artikelgruppe oder Artikellage (10) gemeinsam und weitgehend synchron vertikal nach oben oder unten bewegen.

2. Verfahren nach Anspruch 1, bei dem die erste Auflageebene (38) des ersten Moduls (12) und die zweite Auflageebene (40) des zweiten Moduls (14) zumindest zeit- oder phasenweise während ihrer jeweiligen nach oben oder unten gerichteten vertikalen Bewegungen und während des Überführens der Artikelgruppe oder Artikellage (10) eine annähernd gemeinsame Auflageebene bilden.

3. Verfahren nach Anspruch 1 oder 2, bei dem die erste Auflageebene (38) des ersten Moduls (12) während der Überführung der Artikelgruppe oder Artikellage (10) zumindest zeit- oder phasenweise in ihrem Höhenniveau gegenüber der zweiten Auflageebene (40) des zweiten Moduls (14) annähernd gleich oder unter Ausbildung einer Stufe geringfügig höher oder tiefer liegt.

4. Verfahren nach Anspruch 2 oder 3, bei dem die Überführung der Artikelgruppe oder Artikellage (10) von der ersten Auflageebene (38) des ersten Moduls (12) auf die zweite Auflageebene (40) des zweiten Moduls (14) unmittelbar vor einer Phase der Ausbildung der gemeinsamen Auflageebene der ersten und zweiten Auflageebenen (38, 40) oder gleichzeitig mit Erreichung dieser Phase gestartet wird.

5. Verfahren nach einem der Ansprüche 2 bis 4, bei dem die erste Auflageebene (38) des ersten Moduls (12) und die zweite Auflageebene (40) des zweiten Moduls (14) bei ihrer zumindest zeit- oder phasenweise erfolgenden weitgehend synchronen vertikalen Bewegung zumindest so lange die gemeinsame Auflageebene bilden, bis die Artikelgruppe oder Artikellage (10) vollständig auf die zweite Auflageebene (40) überführt wurde.

6. Verfahren nach einem der Ansprüche 2 bis 5, bei dem zumindest nach einer zeitweise weitgehend synchronen vertikalen Bewegung der beiden Auflageebenen (38, 40), bei Erreichen einer Abgabeposition der zweiten Auflageebene (40) des zweiten Moduls (14), die erste Auflageebene (38) und die zweite Auflageebene (40) so lange eine gemeinsame Auflageebene bilden, bis die Artikelgruppe oder Artikellage (10) vollständig auf die zweite Auflageebene (40) überführt wurde.

7. Verfahren nach einem der Ansprüche 1 bis 6, bei dem die horizontale Überführung der Artikelgruppe oder Artikellage (10) von der ersten Auflageebene (38) des ersten Moduls (12) auf die zweite Auflageebene (40) des zweiten Moduls (14) mittels wenigstens eines an den, in Bezug auf die Förder- bzw. Vorschubbewegung (20, 50) an den rückseitig an der Artikelgruppe oder Artikellage (10) befindlichen Artikeln (16) angreifenden Schubbalkens (18, 42, 56) erfolgt.

8. Verfahren nach Anspruch 7, bei dem ein zumindest temporär den in Förderrichtung (20, 50) frontseitig befindlichen Artikeln (16) zugeordneter Anlagebalken (46, 54) der Artikelgruppe oder -lage (10) zumindest kurz vor oder bei Erreichen der Ruhelage während des Überschubvorganges zwischen den beiden Modulen (12, 14) mit geringem Abstand zu den vordersten Artikeln (16) vorauseilt oder an diesen anliegt.

## Claims

1. A method for the horizontal movement of an article group or article layer (10) from a first vertically movable support level (38) of a first module (12) onto a second vertically movable support level (40) of a second module (14) immediately downstream of the first module (12) in a conveying direction (20, 50) by means of at least one transfer device (19), **characterised in that** the first support level (38) of the first module (12) and the second support level (40) of the second module (14) move vertically upward or downward together and largely synchronously at least temporarily or in phases during the transfer of the article group or article layer (10).

2. The method as recited in claim 1, in which the first support level (38) of the first module (12) and the second support level (40) of the second module (14) form an approximately common support level at least temporarily or in phases during their particular upwardly or downwardly directed vertical movements and during the transfer of the article group or article layer (10).

3. The method as recited in claim 1 or 2, in which the first support level (38) of the first module (12) is approximately at the same height level as, or, forming a step, slightly higher or lower than the second support level (40) of the second module (14) at least temporarily or in phases during the transfer of the article group or article layer (10).

4. The method as recited in claim 2 or 3, in which the transfer of the article group or article layer (10) from the first support level (38) of the first module (12) onto the second support level (40) of the second module (14) is started immediately before a phase of formation of a common support level of the first and second support levels (38, 40) or simultaneously with reaching this phase.

5. The method as recited in one of the claims 2 to 4, in which, during their largely synchronous vertical movement being carried out at least temporarily or in phases, the first support level (38) of the first module (12) and the second support level (40) of the second module (14) form the common support level at least until the article group or article layer (10) has been completely transferred onto the second support level (40).

6. The method as recited in one of the claims 2 to 5, in which, at least after a temporarily largely synchronous vertical movement of the two support levels (38, 40), the first support level (38) and the second support level (40) form a common support level upon reaching a delivery position of the second support level (40) of the second module (14) until the article group or article layer (10) has been completely transferred onto the second support level (40).

7. The method as recited in one of the claims 1 to 6, in which the horizontal transfer of the article group or article layer (10) from the first support level (38) of the first module (12) onto the second support level (40) of the second module (14) is carried out by means of at least one pusher bar (18, 42, 56) engaging with the articles (16) located at the back of the article group or article layer (10) in relation to the conveying movement or, as the case may be, to the feed movement (20, 50).

8. The method as recited in claim 7, in which a support bar (46, 54), which is at least temporarily associated with the articles (16) located in the front of the article group or article layer (10) in relation to the conveying direction (20, 50), runs slightly ahead of the foremost articles (16) or abuts on them at least shortly before or upon reaching the rest position during the transfer procedure between the two modules (12, 14).

## Revendications

1. Procédé de déplacement horizontal d'un groupe d'articles ou d'une couche d'articles (10) depuis un premier plan d'appui (38) verticalement déplaçable d'un premier module (12) sur un deuxième plan d'appui (40) verticalement déplaçable d'un deuxième module (14) disposé immédiatement en aval dudit premier module (12) dans une direction de transport (20, 50), au moyen d'au moins un dispositif de transfert (19), **caractérisé par le fait que** le premier plan d'appui (38) du premier module (12) et le deuxième plan d'appui (40) du deuxième module (14) se déplacent, au moins temporairement ou par phases durant le transfert du groupe d'articles ou de la couche d'articles (10), en commun et dans une large mesure de manière synchrone verticalement vers le haut ou vers le bas.

2. Procédé selon la revendication 1, dans lequel le premier plan d'appui (38) du premier module (12) et le deuxième plan d'appui (40) du deuxième module (14) forment un plan d'appui approximativement commun au moins temporairement ou par phases durant leurs mouvements verticaux dirigés vers le haut ou vers le bas et durant le transfert du groupe d'articles ou de la couche d'articles (10).

3. Procédé selon la revendication 1 ou 2, dans lequel, durant le transfert du groupe d'articles ou de la couche d'articles (10), le premier plan d'appui (38) du premier module (12) est situé au moins temporairement ou par phases à un niveau de hauteur qui est approximativement égal à celui du deuxième plan d'appui (40) du deuxième module (14) ou légèrement supérieur ou inférieur à celui-ci en formant un gradin.

4. Procédé selon la revendication 2 ou 3, dans lequel le transfert du groupe d'articles ou de la couche d'articles (10) depuis le premier plan d'appui (38) du premier module (12) sur le deuxième plan d'appui (40) du deuxième module (14) est démarré immédiatement avant une phase de la formation du plan d'appui commun des premier et deuxième plans d'appui (38, 40) ou en même temps que cette phase est atteinte.

5. Procédé selon l'une quelconque des revendications 2 à 4, dans lequel, lors de leur mouvement vertical dans une large mesure synchrone se faisant au moins temporairement ou par phases, le premier plan d'appui (38) du premier module (12) et le deuxième plan d'appui (40) du deuxième module (14) forment le plan d'appui commun au moins jusqu'à ce que le groupe d'articles ou la couche d'articles (10) ait été transféré(e) complètement sur le deuxième plan d'appui (40).

6. Procédé selon l'une quelconque des revendications 2 à 5, dans lequel, au moins après un mouvement vertical des deux plans d'appui (38, 40) se faisant temporairement dans une large mesure de manière synchrone, lorsqu'une position de remise du deuxième plan d'appui (40) du deuxième module (14) est atteinte, le premier plan d'appui (38) et le deuxième plan d'appui (40) forment un plan d'appui commun jusqu'à ce que le groupe d'articles ou la couche d'articles (10) ait été transféré(e) complètement sur le deuxième plan d'appui (40).

7. Procédé selon l'une quelconque des revendications 1 à 6, dans lequel le transfert horizontal du groupe d'articles ou de la couche d'articles (10) depuis le premier plan d'appui (38) du premier module (12) sur le deuxième plan d'appui (40) du deuxième module (14) se fait au moyen d'au moins une barre de poussée (18, 42, 56) qui se prend sur les articles (16) situés, par rapport au mouvement de transport ou bien d'avance (20, 50), sur la face arrière du groupe d'article ou de la couche articles (10).

8. Procédé selon la revendication 7, dans lequel une barre d'appui (46, 54) qui est associée, au moins temporairement, aux articles (16) situés sur la face frontale dans la direction de transport (20, 50), est en avance, au moins peu avant que la position de repos soit atteinte ou lorsqu'elle est atteinte, durant l'opération de transfert entre les deux modules (12, 14), d'une faible distance par rapport aux articles (16) situés le plus en avant, sur le groupe ou la couche d'articles (10) ou s'applique contre ceux-ci.
